Europäisches Patentamt

European Patent Office

Office européen des brevets

(19)

(11) **EP 1 284 409 A1**

(12) **EUROPÄISCHE PATENTANMELDUNG**

(43) Veröffentlichungstag:
**19.02.2003 Patentblatt 2003/08**

(51) Int Cl.$^7$: **G01B 11/16**, G01M 17/02

(21) Anmeldenummer: **01119568.2**

(22) Anmeldetag: **16.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Mähner, Bernward**
**82275 Emmering (DE)**

(72) Erfinder: **Mähner, Bernward**
**82275 Emmering (DE)**

(74) Vertreter: **Patentanwälte Rüger, Barthelt & Abel**
**Webergasse 3**
**73728 Esslingen (DE)**

(54) **Verfahren und Vorrichtung zur Untersuchung der Verformung von Prüfobjekten**

(57) Bei interferometrischen Prüfsystemen zur Untersuchung der Verformung wird das Prüfobjekt häufig in mehreren Abschnitten vermessen, um eine vollständige Prüfung durchzuführen. Werden besondere Strukturmerkmale insbesondere Fehler gefunden, so ist es dann meist schwierig, die in den Ergebnisbildern gezeigten Strukturmerkmale auf dem Objeckt zu lokalisieren.

Die Aufgabe des neuen Verfahrens besteht darin, die gemessenen interferometrischen Daten von den unterschiedlichen Abschnitten in ein gemeinsames Objektkoordinatensystem zu überführen. Hierzu wird die Formgestalt des Objektes vermessen und daraus die Raumkoordinaten der Verformungsdaten auf der Objektoberfläche bestimmt.

Somit ist ein Verfahren geschaffen, das es ermöglicht, die genaue räumliche Ausrichtung und Lage der gefundenen Strukturmerkmale auf dem Objekt zu bestimmen. Hierdurch können einerseits die Fehler auf dem Objekt genau lokalisiert werden und andererseits die Ergebnisse quantitativ exakt ausgewertet werden.

Fig. 1a

EP 1 284 409 A1

**Beschreibung**

Es ist bekannt, dass zur flächenhaften Bestimmung von Verschiebungen oder Dehnungen eines Prüfobjektes mit diffus streuender Oberfläche interferometrische Verfahren, wie das ESPI- (Electronic Speckle Pattern Interferometry) oder das Shearing Verfahren eingesetzt werden können. Welches Verfahren für ein gegebenes Prüfobjekt angewendet werden kann, hängt von der gewünschten Ergebnisart und der geforderten Auflösung bzw. der Steifigkeit des Prüfobjektes im Verhältnis zur Größe der aufgebrachten Kräfte ab. Gemeinsam ist den flächenhaft arbeitenden Prüfverfahren jedoch die Verwendung einer Kamera zur Abbildung des Objektes auf einem Bildsensor. Unabhängig vom verwendeten Messprinzip ergeben sich bei diesen kamerabasierten Verfahren folglich Ergebnisse, die in Bildform vorliegen. Wird als Bildsensor ein CCD-Chip verwendet, so bestehen die erzeugten (Ergebnis-) Bilder aus einer endlichen Anzahl von Bildpunkten.

Die Bilder von der Kamera des Prüfsystems und letztlich die in den einzelnen Bildpunkten gespeicherten Intensitätswerte bilden die Ausgangsdaten für jedwede Weiterverarbeitung der Messergebnisse. Zur Weiterverarbeitung der Messergebnisse kommen fast ausnahmslos digitale Bildverarbeitungssysteme zum Einsatz.

Bei den obengenannten Prüfverfahren werden bei statischer Prüfung üblicherweise zwei Zustände des Prüfobjektes verglichen, indem das Objekt in zwei unterschiedlichen Belastungszuständen aufgenommen wird und die Interferogramme der beiden Zustände subtrahiert werden. Hierdurch ergibt sich ein Differenzinterferogramm, welches je nach verwendetem Messprinzip entweder die Verschiebung oder die Dehnung des Objektes zwischen den beiden Zuständen in Form von Interferenzlinien darstellt. Der Betrag der Verschiebung oder Dehnung an einem Bildpunkt des Differenzinterferogramms kann dann beispielsweise durch Abzählen der Interferenzlinien ausgehend von einem Bildpunkt mit bekannter Verschiebung oder Dehnung und unter Berücksichtigung der verwendeten Lichtwellenlänge bestimmt werden.

Wird der Messkopf mit einer Phasenschiebeeinheit ausgerüstet, so kann eine erweiterte Auswertung nach dem Prinzip des Phasenshiftverfahrens durchgeführt werden (W.Osten, "Digitale Verarbeitung und Auswertung von Interferenzbildern", Kap. 6, Akademie Verlag ISBN 3-05-501294-1). Hierbei werden Phasenbilder erzeugt, welche jedem Bildpunkt einen bestimmten Phasenwinkel zuordnen. Werden die Phasenbilder von zwei Zuständen des Objektes subtrahiert, so erhält man ein Phasendifferenzbild. Im Gegensatz zum obengenannten Differenzinterferogramm zeigt das Phasendifferenzbild nicht sinusförmig modulierte Interferenzlinien, sondern direkt den Phasendifferenzwinkel zwischen zweitem und erstem Zustand. Ein weiterer Vorteil dieser Darstellung ist ferner, dass aufgrund der beim Phasenshiftverfahren angewendeten Rechenvorschrift der Phasenwinkel normiert wird, dass heißt, der in einem Phasenbild mit einem Phasenwinkel korrespondierende Grauwert ist unabhängig von der Bildkoordinate immer konstant.

Je nach Form und Größe des Prüfobjektes muss die interferometrische Messung häufig nacheinander oder gleichzeitig in mehreren Abschnitten erfolgen. Vom Prüfobjekt kann nämlich in einer Ansicht nicht mehr erfasst und anschließend ausgewertet werden, als die Kamera des Meßsystems aus ihrer aktuellen Position vom Prüfobjekt sieht. Um das Prüfobjekt vollständig zu erfassen muss folglich das Prüfobjekt aus mehreren unterschiedlichen Positionen aufgenommen werden. Dieser Vorgang lässt sich parallelisieren wenn gleichzeitig mehrere Messköpfe verwendet werden.

Eine typische Anwendung dieser Art ist beispielsweise die interferometrische Prüfung von Reifen. So beschreibt die Patentschrift DE 42 31 578 C2 ein Verfahren zur Ermittlung von Verformungen an Prüfobjekten, wobei das Ausführungsbeispiel zeigt, dass insbesondere an die sektorweise Prüfung von Reifen gedacht wurde. Die Patentschrift US 5 786 533 schlägt ein Verfahren zum gezielten Lokalisieren von Defekten in Reifen insbesondere im Gürtelbereich vor. Auch hier lässt die gezeigte Anordnung von Messkopf und

Prüfobjekt eine Auswertung des gesamten Gürtelbereiches nur dann zu, falls in mehreren Sektoren geprüft wird. Bei den oben genannten Anwendungsbeispielen wird typischerweise nach Strukturdefekten gesucht, die sich unter der Oberfläche befinden und von außen nicht sichtbar sind.

Die Kamera des interferometrischen Messkopfes liefert perspektivische Abbildungen des Objektes, die dieses je nach der verwendeten Abbildungsoptik zusätzlich auch noch mehr oder weniger stark verzerrt darstellen. Sollen nun die in den Ergebnisbildem aufgezeigten Defekte auf dem Prüfobjekt lokalisiert werden, so ergeben sich Probleme, da das Ergebnisbild das Objekt geometrisch verzerrt darstellt und somit keine exakte Zuordnung von Bildposition und Objektkoordinaten möglich ist. Ist der Defekt auf dem Prüfobjekt von außen nicht sichtbar und enthalten die Abbildungen auch sonst keine sichtbaren Merkmale, wie Marken, Kanten usw., die seine Position auf dem bzw. im Prüfobjekt kennzeichnen würden, so kann seine wahre Position anhand der Ergebnisbilder nur grob geschätzt werden.

Eine weitere Erschwernis stellt die unbekannte Orientierung der Ergebnisbilder unterschiedlicher Oberflächenabschnitte zueinander dar, falls das Prüfobjekt abschnittsweise vermessen wurde. Die Aufnahmen von den unterschiedlichen Oberflächenabschnitten werden sich dann entweder mehr oder weniger stark überlappen oder es klaffen Lücken unbekannter Größe. Dies erschwert dann aber auch eine quantitative rechnergestützte Bewertung der Ergebnisse, da z.B. die Fläche gefundener Defekte nicht genau bestimmt werden kann. Werden beispielsweise die Überlappungsbereiche nicht ermittelt, so werden dort liegende Defekte mehrfach gezählt und es ergeben sich falsche Ergebnisse.

Die Darstellung aller gemessenen Oberflächenabschnitte in einem gemeinsamen Koordinatensystem ist daher eine oft gestellte Forderung.

Häufig behilft man sich damit, indem auf des Prüfobjekt Marken oder nummerierte Linien aufgemalt werden, die dann in den Bildern der Kamera sichtbar sind. Diese Vorgehensweise ist aber mühsam, da diese Marken bei jedem Prüfobjekt neu angebracht und nach der Messung ggf. auch wieder entfernt werden müssen.

Man kann sich auch an Objektkanten im Videobild orientieren und dann über geeignete Bildverarbeitungsfunktionen versuchen, die Bilder interaktiv zu entzerren. Diese Vorgehensweise ist aber innerhalb eines automatischen Prüfablaufs und ohne speziell geschultes Personal nicht anwendbar.

In der Patentschrift WO 97 / 05449 A1 wird unter anderem ein Verfahren beschrieben, bei dem die dreidimensionale Oberflächenkontur eines Objektes abschnittsweise vermessen wird. Aus den Konturdaten wird ein Oberflächenmodell des Objektes erzeugt. Der Messkopf zur dreidimensionalen Erfassung der Objektoberfläche besitzt zusätzlich eine Einrichtung zur Erfassung der Farbinformation von der Objektoberfläche. Über ein sogenanntes texture-mapping-Verfahren wird die gewonnene Farbinformation punkte- bzw. abschnittsweise auf das erzeugte Oberflächenmodell übertragen. Schließlich erhält man ein Oberflächenmodell, das nicht nur die Formgestalt des Objektes, sondern auch dessen Farbgebung originalgetreu wiedergibt.

Ausgehend von diesem Stand der Technik ist es Aufgabe der Erfindung, ein Verfahren und eine Vorrichtung anzugeben, die eine genaue Bestimmung der räumlichen Position der interferometrisch gewonnenen Messwerte auf dem Objekt und die räumliche Zuordnung der einzelnen interferometrisch gemessenen Oberflächenabschnitte zueinander ermöglicht.

Das Verfahren soll dabei automatisch ablaufen und keiner interaktiven Mitwirkung durch den Benutzer bedürfen. Es soll ferner die Möglichkeit bieten, die interferometrischen Messergebnisse in ein gemeinsames Koordinatensystem transformieren zu können.

Diese Aufgabe wird durch das in Patentanspruch 1 angegebene Verfahren und die in Patentanspruch 20 angegebene Vorrichtung gelöst.

Vorteilhafte Weiterbildungen sind in den jeweiligen Unteransprüchen angegeben. Erfindungsgemäß wird der optische Strahlengang der Kamera des interferometrischen Messkopfes durch eine Kalibrierung bestimmt, so dass insbesondere Ort und Richtung für alle von beliebigen Bildpunkten der Kamera ausgehenden Beobachtungsstrahlen bezüglich der Kamera bekannt sind.

Erfindungsgemäß wird der interferometrische Messkopf relativ zum Prüfobjekt definiert von einem zum nächsten interferometrisch zu vermessenden Oberflächenabschnitt bewegt, d.h. Richtung und Betrag dieser Bewegungen sind bezüglich des Prüfobjektes und bezüglich der vorhergehenden Positionen des Messkopfes für jeden erfassten Abschnitt bestimmbar. Bei diesen Bewegungen kann es sich dabei um verschiedenste Rotationsoder Linearbewegungen oder Kombinationen von solchen handeln. Diese Bewegungen haben das Ziel, dass der interferometrische Messkopf so viele unterschiedliche Abschnitte vom Prüfobjekt vermisst, dass schließlich der gesamte interessierende Bereich des Prüfobjektes lückenlos erfasst ist.

Aus den definierten Bewegungen des Messkopfes und den Kalibrierdaten der Kamera des Interferometers sind somit nicht nur für jeden vermessenen Oberflächenabschnitt Ort und Richtung der Beobachtungsstrahlen bezüglich der Kamera sondern auch bezüglich eines gemeinsamen zum Prüfobjekt ortsfesten Koordinatensystems bekannt.

Zur Zuordnung von interferometrisch erfassten Verformungsdaten und Objektkoordinaten fehlen jedoch die Raumkoordinaten der auf dem Bildsensor der Kamera abgebildeten Oberflächenpunkte des Prüfobjekts. Durch die zuvor angegebenen Verfahrensschritte sind zwar bereits Ort und Richtung der Beobachtungsstrahlen, welche die Objektoberfläche schneiden, bekannt, es fehlen aber die Abstände der abgebildeten Oberflächenpunkte zur Kamera.

Die interferometrisch zu untersuchenden Oberflächenabschnitte werden deshalb erfindungsgemäß mittels projizierter Lichtschnitte, die über eine Kamera erfasst werden, dreidimensional vermessen. In vielen Anwendungsfällen ist es dabei vorteilhaft, die Erfassung der Oberflächenkontur ebenfalls abschnittsweise durchzuführen. Denn da bei diesen dreidimensionalen Konturmessverfahren erfindungsgemäß ebenfalls eine Kamera mit einem flächigen Bildsensor eingesetzt wird, ergeben sich bezüglich der vollständigen Erfassung der dreidimensionalen Formgestalt des Prüfobjektes genau die selben Probleme wie bei der interferometrischen Vermessung mittels eines kamerabasierten, interferometrischen Meßsystems.

Gemäß einer vorteilhaften Ausführungsform der Erfindung bestehen die Lichtflächen zur Erzeugung der Lichtschnitte aus ebenen Flächen, die auf dem Objekt jeweils einen linienförznigen Lichtschnitt erzeugen. Es können aber auch Punkte, Kreisflächen, oder andere Leuchtmarken auf das Objekt projiziert werden, um Triangulationsmarken zu erhalten.

Die Systeme zur interferometrischen Messung und zur Konturerfassung können zwar aus völlig getrennten Einrichtungen bestehen, jedoch ist dies aus Kostengründen von Nachteil, dem kaum Vorteile gegenüberstehen.

Das interferometrische Meßsystem und das Konturmeßsystem sind daher vorteilhafterweise starr miteinander verbunden und werden von ein und derselben Einrichtung relativ zum Prüfobjekt bewegt.

Die Kamera zur Erfassung der Lichtschnitte und die Kamera des interferometrischen Messkopfes sind ferner vorzugsweise identisch, d.h. es handelt sich vorzugsweise um ein und dieselbe Kamera. Vorzugsweise bestehen zudem die erforderlichen Bildverarbeitungssysteme für die Auswertung sowohl der interferometrischen Bilddaten als auch der Lichtschnittbilder aus ein und demselben Bildverarbeitungssystem, auch wenn die einerseits zur Berechnung der Verformung aus interferometrisch gewonnenen Messdaten und andererseits zur Berechnung der Formgestalt jeweils anzuwendenden Auswerteverfahren völlig verschieden sind.

Über eine Triangulationsrechnung wird erfindungsgemäß die dreidimensionale Form der Lichtschnitte und daraus die Formgestalt der Objektoberfläche bestimmt.

Liegen nun sowohl die interferometrischen Messergebnisse als auch die Konturdaten vom Objekt vor, so werden in einem weiteren Verfahrensschritt die gewonnenen Raumkoordinaten der Oberfläche dazu verwendet, um den interferometrisch erfassten Verformungsdaten die zutreffenden Raumkoordinaten zuzuordnen. Um dabei die räumliche Orientierung der einzelnen interferometrisch vermessenen Oberflächenabschnitte zueinander bestimmen zu können, werden erfindungsgemäß die durchgeführten definierten Relativbewegungen des Interferometers von einem zum nächsten interferometrisch vermessenen Oberflächenabschnitt verwendet.

Damit können den bildpunktweise interferometrisch gewonnenen Messwerten aus allen Messabschnitten Koordinaten bezüglich eines gemeinsamen Koordinatensystems zugeordnet werden. Diese Zuordnung ist umkehrbar, d.h. ebenso können bestimmten Oberflächenkoordinaten ihre Verformungsdaten zugeordnet werden.

Je nach der verwendeten Ausführungsform der Erfindung kann es dazu kommen, dass für einen Oberflächenpunkt eine Raumkoordinate vorliegt aber kein Verformungswert oder umgekehrt für einen Oberflächenpunkt ein Verformungswert aber keine Raumkoordinate. Auch bei der Koordinatentransformation der Ergebnisse zur Darstellung derselben in einem anderen Koordinatensystem können bei der Darstellung als Rastergrafik zunächst Lücken auftreten.

In all diesen Fällen werden die fehlenden Werte vorteilhafterweise durch Interpolation aus den Werten der umliegenden Oberflächenpunkte, für die die entsprechende Größe vorliegt, berechnet. Dabei ergibt sich noch ein Problem, falls die Verformungsdaten als $2\pi$ modulierte Phasenwerte vorliegen, wie dies typischerweise nach Anwendung eines Phasenshiftverfahrens der Fall ist. Aufgrund der $2\pi$ Modulation weist das Phasenbild Unstetigkeitsstellen auf, wodurch eine Interpolation nicht überall fehlerfrei möglich ist.

Dieses Problem wird vorteilhafterweise dadurch beseitigt, indem die Interpolation nicht im Phasenbild sondern in den Sinus- und Cosinustransformierten des Phasenbildes durchgeführt wird. Zur Berechnung der Sinus- und Cosinustransformierten des Phasenbildes wird hierzu punktweise vom Phasenwert der Sinus- und der Cosinuswert berechnet. Sinus- und Cosinustransformierte sind im Gegensatz zum Phasenbild überall stetig differenzierbar, so dass eine Interpolation hier problemlos durchführbar ist. Nach Berechnung der interpolierten Sinus- und Cosinuswerte werden anschließend der Phasenwerte über eine geeignete Rücktransformation, z.B. die Arcustangensfunktion, berechnet.

Erfolgt die Erfassung der Kontur gemäß einer vorteilhaften Ausführungsform mittels projizierter Streifen, ist das Verfahren recht einfach durchführbar, falls die Koordinatenmessung an genau den Positionen erfolgt, an denen auch die interferometrische Messung durchgeführt wird und zur Erfassung der Bilder für die interferometrische Messung und die Konturmessung ein und dieselbe Kamera verwendet wird. Dann erhält man nämlich die Raumkoordinaten und die Verformungsdaten für exakt die gleichen abgebildeten Objektpunkte, so dass die Zuordnung der Raumkoordinaten zu den Verformungswerten und umgekehrt trivial ist. Probleme kann hier allerdings die Verwendung eines Shearing-Moduls als Abbildungsoptik für die Kamera bereiten. Das Shearing Modul erzeugt nämlich ein Doppelbild auf dem Bildsensor wobei die einzelnen Bilder seitlich gegeneinander versetzt sind. Dieser für die Shearing Messtechnik erwünschte Effekt bereitet aber bei der Abbildung der Linienmuster zur Konturerfassung Probleme. Die Linienmuster werden nun ebenfalls doppelt abgebildet und können nicht sauber unterschieden werden. Es ist dann zweckmäßig, entweder die Linien des Projektionsgitters parallel zur Scherrichtung des Shearing-Moduls auszurichten oder eine eigene Kamera für das Konturerfassungssystem zu verwenden, die z.B. unmittelbar neben der des Interferometers angeordnet ist.

Eine andere vorteilhafte Ausführungsform der Erfindung ist die Verwendung einzelner Lichtflächen, beispielsweise zweier Lichtschnittebenen, die z.B. mittels eines Laserscanners erzeugt werden. Da hierbei nur zwei Lichtschnitte in einer Position auswertbar sind, werden vorzugsweise die Lichtschnitte dann von der Kamera aufgenommen und dem Bildverarbeitungssystem zugeführt, wenn sich das Konturerfassungssystem von einem zum nächsten Oberflächenabschnitt bewegt. Ist hierbei die Verfahrgeschwindigkeit im Verhältnis zur Bildfrequenz der Kamera nicht zu hoch, so werden hierdurch zahlreiche verschiedene Lichtschnitte und damit Objektschnitte erzeugt. Zur Vermeidung des Verwischens der einzelnen Bilder aufgrund der Bewegung der Kamera des Konturerfassungssystem relativ zum Objekt, wird diese Kamera vorteilhafterweise mit einem mechanischen oder elektronischen Shutter ausgerüstet. Natürlich kann alternativ die Bewegung von einem zum nächsten Abschnitt auch in mehreren Einzelschritten erfolgen, dann dauert der gesamte Bewegungsvorgang aber wesentlich länger.

Zu jeder Aufnahme der Lichtschnitte wird gemäß einem weiteren Aspekt der Erfindung gleichzeitig die momentane Position des Messkopfes relativ zum Prüfobjekt ermittelt, so dass letztlich die räumliche Lage aller aufgenommenen Lichtschnitte innerhalb eines gemeinsamen Koordinatensystems eindeutig bestimmt werden kann. Diese Ausführungsform besitzt mehrere wichtige Vorteile:

Der gerätetechnische Aufwand, um zusätzlich zur interferometrischen Messung eine Konturerfassung durchführen zu können, ist vergleichsweise gering. Lediglich eine Einrichtung zur Erzeugung der Lichtschnitte ist erforderlich. Ferner ist zur Konturerfassung kein zusätzlicher Zeitbedarf erforderlich, da diese während der Bewegung des Messkopfes von einem zum nächsten Abschnitt erfolgen kann.

Der wichtigste Vorteil ist aber darin zu sehen, dass die erzeugten Lichtschnitte auch dann noch einwandfrei identifiziert und ausgewertet werden können, wenn die Abbildungsoptik der die Lichtschnitte erfassenden Kamera gemäß einem Aspekt der Erfindung ein Shearing Modul beinhaltet. Jeder Lichtschnitt wird dann zwar als doppelte Linie abgebildet, jedoch kann zwischen diesen beiden Linien problemlos gemittelt werden.

Die Laserlichtquellen, die zur Beleuchtung des Prüfobjektes für die interferometrische Vermessung in jedem Fall erforderlich sind, stellen bei der Konturerfassung im Prinzip Störlichtquellen dar. Es ist jedoch besser, die Leuchtstärke der Lichtschnitte so hoch zu wählen, dass das Licht dieser Laserlichtquellen gegenüber den Lichtschnitten nicht weiter ins Gewicht fällt, als diese Laserlichtquellen während der Konturmessung abzuschalten. Viele Laserlichtquellen neigen nämlich unmittelbar nach dem Einschalten zu Modensprüngen, die eine nachfolgende interferometrische Messung dann behindern bzw. verzögern würden. Werden als Laserlichtquellen Laserdioden oder ähnlich platzsparende Lichtquellen verwendet, so werden diese zweckmäßigerweise fest in den interferometrischen Messkopf integriert.

Bei der abschnittsweisen Prüfung eines Objektes ist es erforderlich, die Lage der einzelnen Messabschnitte, den Abstand des Messkopfes zum Prüfobjekt, sowie die notwendige Anzahl von Messabschnitten, die zur vollständigen Erfassung der zu untersuchenden Oberfläche benötigt werden, festzulegen. Diese Festlegungen führen dann zu Prüfmaschinenparametern, wie z.B. den Schrittmotor- und Achspositionen, der Anzahl der Sektoren usw.. Gemäß einem weiteren Aspekt der Erfindung wird das Konturmeßsystem zusätzlich dazu verwendet, um auch diese Parameter zu bestimmen. Die vom Konturmeßsystem gelieferten Daten können dabei entweder dem Bediener einen Soll/Ist-Vergleich der Messkopfposition ermöglichen, oder zur vollautomatischen Positionierung des Messkopfes dienen.

Im Folgenden wird ein Ausführungsbeispiel der Erfindung anhand von Zeichnungen erläutert.

In den Zeichnungen zeigen:

Fig. 1a: ein Prüfsystem zur abschnittsweisen interferometrischen Vermessung von Objekten in der Draufsicht

Fig. 1b: das in Figur 1a gezeigte Prüfsystem in perspektivischer Darstellung.

Fig. 2: die Darstellung einer Konturmessung während der Messkopf bewegt wird

Fig. 3a: die Darstellung eines interferometrischen Messergebnisses eines 1. Abschnittes

Fig. 3b: die Darstellung eines interferometrischen Messergebnisses eines 2. Abschnittes

Fig. 3c: die Überführung der interferometrischen Messergebnisse aus Fig. 3a und Fig. 3b in ein gemeinsames Koordinatensystem.

Fig. 4: die Anwendung des neuen Verfahrens am Beispiel eines Fahrzeugreifens.

Fig. 5: die Lage der einzelnen vermessenen Oberflächenabschnitte auf dem in der Figur 4 gezeigten Fahrzeugreifen.

Fig. 6: Die Überführung der Messergebnisse von den in Figur 5 gezeigten Oberflächenabschnitten in ein gemeinsames Koordinatensystem.

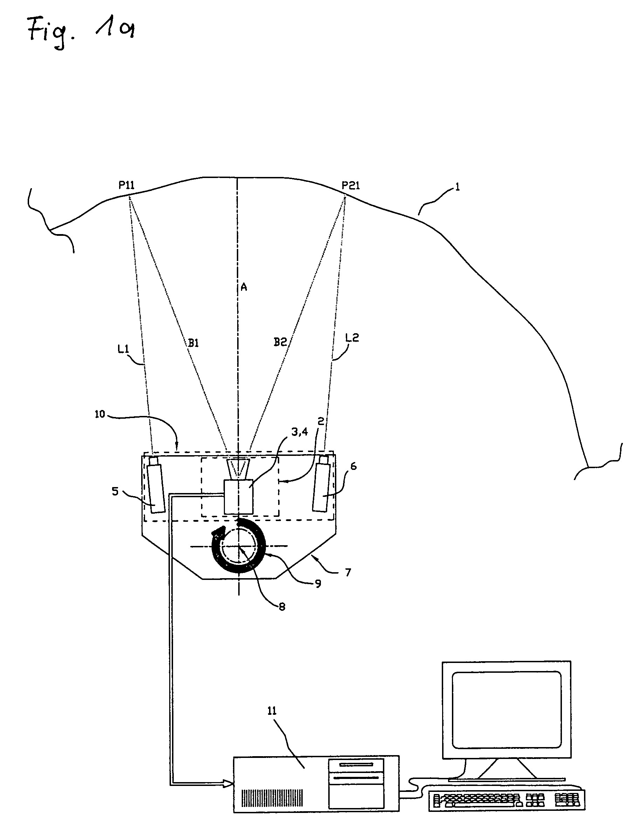

Die Figuren 1a und 1b zeigen ein Prüfsystem zur Prüfung zylindrischer Objekte z.B. dem Gürtel eines Fahrzeugreifens in der Draufsicht. Es besitzt einen zentrisch angeordneten interferometrischen Messkopf 2, der relativ zum Prüfobjekt 1 gedreht wird, so dass die Innenseite des Prüfobjektes 1 sektorweise geprüft werden kann. Für eine 100% Inspektion wird die Sektorgröße so gewählt, dass sich die mit der Kamera 3 des Interferometers 2 aufgenommenen Bilder der einzelnen Sektoren, beispielsweise der Sektoren 1 und 2 hinreichend überlappen. Die interferometrische Messung wird nun für jeden Sektor durchgeführt und dazwischen das Interferometer 2 und das Konturerfassungssystem 10 von einem zum nächsten Sektor mittels einer motorisch betriebenen Dreheinrichtung 9 um die Achse 8 weitergedreht. Hierzu sind die Einrichtungen 5, 6 sowie die Kamera 4, die zusammen das Konturerfassungssystem 10 bilden, und das Interferometer 2 über die Befestigungsvorrichtung 7 starr miteinander verbunden und werden gemeinsam mittels der Einrichtung 9 relativ zum Prüfobjekt gedreht. Bei der konstruktiven Ausführung der Prüfmaschine ist es dabei natürlich prinzipiell egal, ob der Messkopf oder das Prüfobjekt drehbar gelagert ist.

Links und rechts vom interferometrischen Messkopf 2 ist jeweils eine optische Einrichtung 5 und 6 zur Erzeugung jeweils einer Lichtschnittebene L1 bzw. L2 angebracht. Diese Einrichtungen 5 und 6 können beispielsweise aus jeweils einem Laserdiodenmodul mit Linienoptik bestehen. Bei der gezeigten Anordnung der Lichtschnittebenen L1 und L2 zur optischen Achse A der Kamera 4 ist stets sichergestellt, dass jeweils nur ein Lichtschnitt in der linken Bildhälfte und ein Lichtschnitt in der rechten Bildhälfte der Kamera 4 abgebildet wird. Damit können die beiden Lichtschnitte P11 und P21, welche die Schnittlinien der Lichtschnittebenen L1 bzw. L2 mit der Oberfläche des Prüfobjektes 1 sind, stets eindeutig in den Kamerabildern identifiziert werden, auch wenn sie gleichzeitig von der Kamera 4 erfaßt werden und/ oder durch ein Shearing Modul abgebildet werden.

Die Einrichtungen 5 und 6 zur Erzeugung der Lichtschnittebenen L1 bzw. L2 werden während der interferometrischen Messung vorteilhafterweise abgeschaltet, um diese nicht zu beeinträchtigen. Hier würden die Lichtschnittebenen ansonsten als Störlicht wirken. Nach Beendigung der interferometrischen Messung werden die Lichtschnittebenen eingeschaltet und der gesamte Meßkopf mittels der Dreheinrichtung 9 um die Achse 8 zum nächsten Sektor gedreht. Die Kamera 4, die vorzugsweise identisch mit der Kamera 3 des Interferometers 2 ist, beobachtet nun die auf dem Objekt 1 sichtbaren Linien P11 und P21. Ist die Kamera 3 des Interferometers 2 kalibriert, so kann ein Punkt des Lichtschnitts P11 über den Beobachtungsstrahl B1 auf einen Bildpunkt der Kamera 3 projiziert werden, d.h. Raumkoordinaten von Lichtschnitten können Bildkoordinaten der interferometrisch gemessenen Verformungsdaten zugeordnet werden.

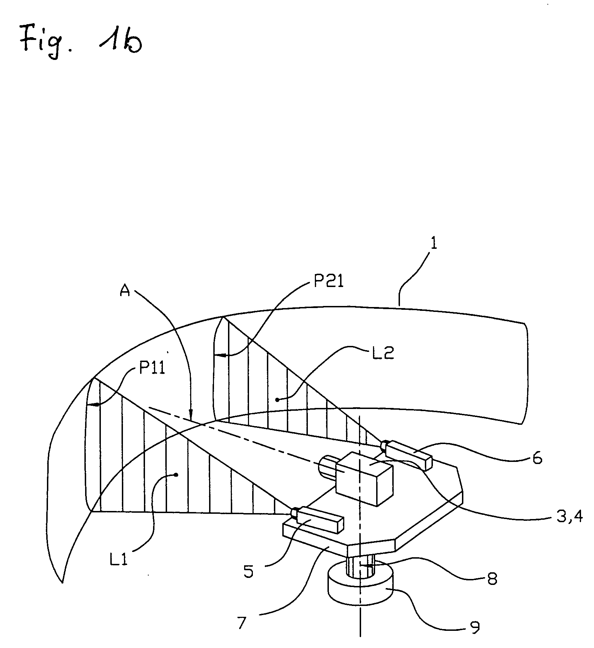

Die Figur 2 zeigt den Ablauf der Konturmessung während der Meßkopf von der Position S1 in die Position S5 gedreht wird. Die Bilder der Kamera 4 werden fortlaufend aufgenommen und abgelegt. Zu jedem der abgelegten Bilder von den Lichtschnittebenen L1 und L2 wird ferner die Meßkopfposition bestimmt. So wird zu Beginn der Drehbewegung eine Aufnahme bei S1, während der Drehbewegung die Aufnahmen bei S2 bis S4 gemacht und am Ende der Drehbewegung eine weitere Aufnahme bei Position S5 gemacht. Die Oberfläche der Sektoren 1 und 2 wird somit mit insgesamt 10 Lichtschnitten erfaßt bzw. vermessen. Die nachfolgende Tabelle zeigt, an welcher der 5 verschiedenen Positionen welche Lichtschnitte aufgenommen wurden:

| Position | erfaßte Lichtschnitte |
|----------|----------------------|
| S1 | P11, P21 |
| S2 | P12, P22 |
| S3 | P13, P23 |
| S4 | P14, P24 |
| S5 | P15, P25 |

Nach Beendigung der Drehbewegung des Meßkopfes ist nun die Oberflächengeometrie der Sektoren 1 und 2 mit guter Auflösung berechenbar. Hierzu wird eine Triangulationsrechnung durchgeführt wobei über die bekannten Meßkopfpositionen S1 bis S5 alle Lichtschnitte in einem gemeinsamen Koordinatensystem dargestellt werden können.

Durch die Drehbewegung von S 1 nach S5 bewegt sich das Interferometer vom Sektor 1 zum Sektor 2. Eine interferometrische Messung wird deshalb einmal in der Stellung S1 zur Erfassung des Sektors 1 und nach Beendigung der Drehbewegung in der Stellung S5 zur Erfassung des Sektors 2 durchgeführt.

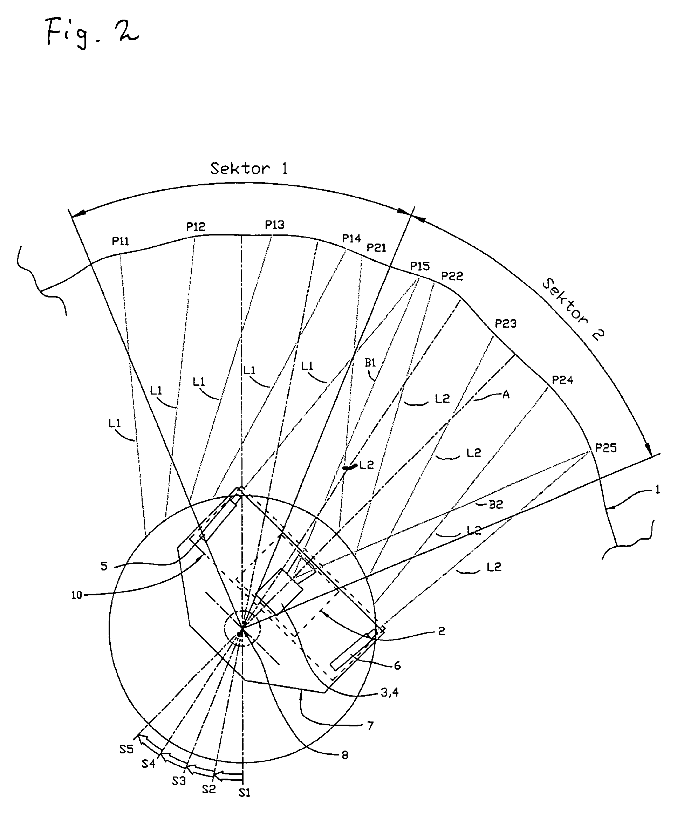

Die Figuren 3a bis 3c zeigen schematisch, wie die gewonnenen Konturdaten nun dazu genutzt werden, um die interferometrisch gemessenen Verformungsdaten des Sektors 1 und des Sektors 2 aus Figur 2 in einem gemeinsamen Koordinatensystem darzustellen.

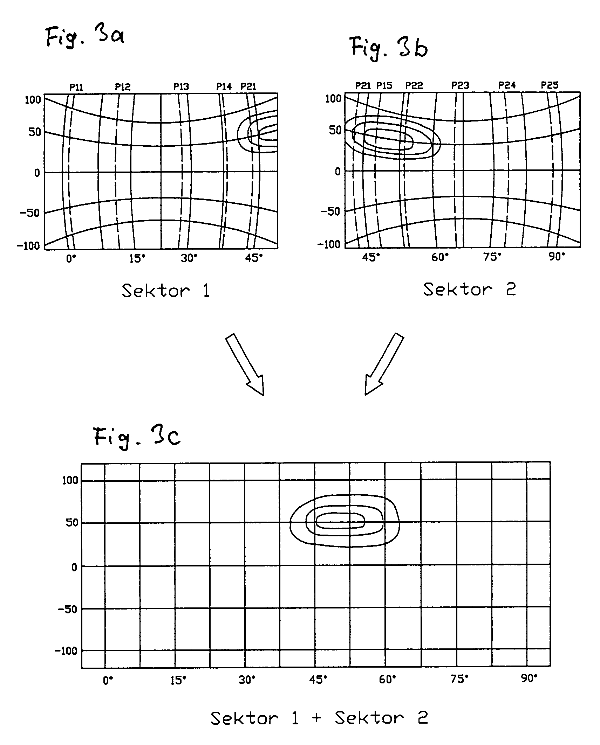

Die interferometrischen Meßdaten der Sektoren 1 und 2 liegen zunächst als Bilddaten z.B. in Form von Phasenbildern vor. Die in Figur 3a und 3b gezeigten Ergebnisbilder weisen dabei zunächst eine geometrische Verzerrung auf. Diese wird hervorgerufen durch die Krümmung der Objektoberfläche sowie die Verzeichnungsfehler der abbildenden Optik.

Die Koordinaten der Lichtschnitte werden nun dazu verwendet, Bildpunkten in den interferometrisch gewonnenen Verformungsbildern die zutreffenden Raumkoordinaten zuzuordnen. Die gemessenen Koordinaten der Lichtschnitte können hierzu über die bekannten Geometriedaten der Kamera 3 in die Ergebnisbilder projiziert werden, so daß zunächst für all jene Bildpunkte Koordinaten vorhanden sind, die auf einem der Lichtschnitte P11 bis P25 liegen. Zur Orientierung ist die Lage der Lichtschnitte P11 bis P25 in den Figuren 3a und 3b eingezeichnet. Für die umliegenden Werte bzw. Bildpunkte werden die Koordinaten durch Interpolation berechnet. Über eine Koordinatentransformation können die Verformungsdaten schließlich in einem gemeinsamen Koordinatensystem dargestellt werden, wie es beispielhaft in Figur 3c dargestellt ist. Die in den Sektoren 1 und 2 im Überlappungsbereich liegende Fehlstelle wird nun im gemeinsamen Koordinatensystem in ihrer wahren Größe und Form sichtbar.

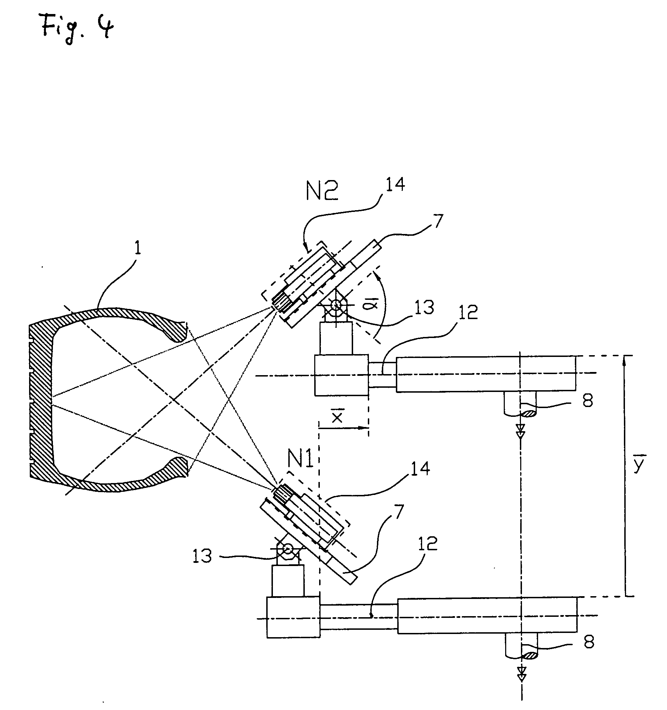

Die Figuren 4 bis 6 zeigen die praktische Anwendung des neuen Verfahrens am Beispiel eines Fahrzeugreifens. Zur Ermittlung innerer Strukturdefekte wird dabei, wie häufig üblich, die Innenseite des Reifens interferometrisch vermessen.

Die Figur 4 zeigt die Positionierung des Messkopfes 14 gegenüber dem Querschnitt des Reifens 1. Der Messkopf 14 entspricht dem in den Figuren 1a und 1b gezeigten Messsystem, bestehend aus einem Lichtschnittsensor zur Ermittlung der Objektkontur einerseits und einem interferometrischen Messkopf zur flächenhaften interferometrischen Verformungsmessung andererseits. Lichtschnittsensor und interferometrischer Messkopf sind wiederum über die Befestigungsvorrichtung 7 starr miteinander verbunden. Gegenüber den Figuren 1a und 1b ist der Messkopf 14 jedoch nicht nur drehbar um die Achse 8 gelagert, sondern ist auch in Richtung der Achse 8 verschiebbar, um die Achse 13 schwenkbar und in Richtung der Achse 12 verschiebbar. Durch die Erweiterung der Beweglichkeit des Meßsystems um diese drei Freiheitsgrade wird eine optimale Positionierbarkeit des Messkopfes 14 gegenüber dem Reifen 1 erzielt. Die Innenseite des Reifens 1 kann hiermit bezüglich des Reifenquerschnittes vollständig erfasst werden, indem der Messkopf 14 einmal in der Position N 1 und einmal in der Position N2 eine Messung durchführt. Um den Reifen am gesamten Umfang zu prüfen wird der Messkopf 14 um die Rotationsachse 8 gedreht und der Reifen sektorweise geprüft. Bei der Bewegung des Messkopfes 14 von einem Sektor zum nächsten, wird in der in Figur 2 gezeigten Weise die Kontur der Innenseite des Reifens erfasst. Um die räumliche Zuordnung der Daten aus Position N 1 mit denen aus der Position N2 zu bestimmen, werden die definierten Verschiebungen des Messkopfes 14 verwendet, die durchgeführt werden, um den Messkopf 14 von der Position N 1 in die Position N2 zu bewegen. Dies ist eine Kombination aus einer Verschiebung $\vec{y}$ in Richtung der Achse 8, einer Verschiebung $\vec{x}$ in Richtung der Achse 12 und einer Drehbewegung $\vec{\alpha}$ um die Achse 13. Um die Anzahl der Bewegungen des Messkopfes 14 zu minimieren, ist es vorteilhaft den Reifen zunächst sektorweise am ganzen Umfang des Reifens mit der Position N1 zu prüfen, den Messkopf dann in die Position N2 zu bewegen und anschließend wiederum die Prüfung sektorweise am ganzen Umfang des Reifens 1 vorzunehmen.

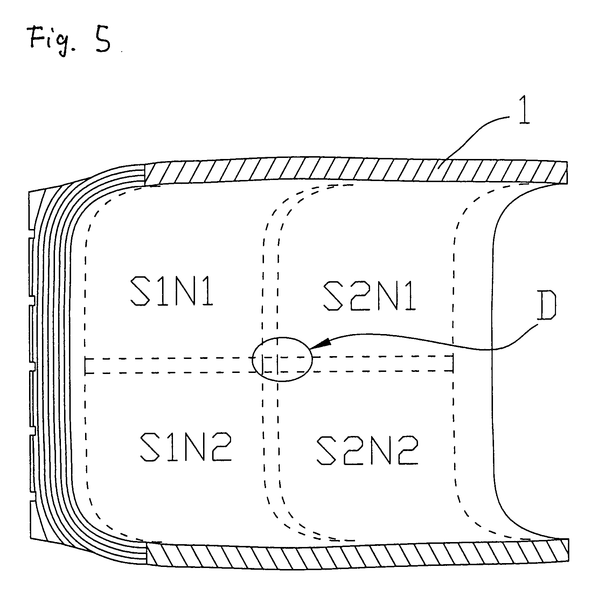

Die Figur 5 zeigt die Lage der einzelnen interferometrisch geprüften Oberflächenabschnitte der ersten beiden Sektoren auf dem Reifen 1 bei Anwendung obiger Prüfmethode. Für alle weiteren Sektoren gelten wegen der Rotationssymmetrie des Prüfobjektes genau die selben Verhältnisse. Um eine vollständig flächendeckende Prüfung zu erzielen, überlappen sich die einzelnen vermessenen Oberflächenabschnitte S1N1, S2N1, S1N2 und S2N2 sowohl in horizontaler als auch in vertikaler Richtung. Im Überlappungsbereich der Abschnitte S1N1, S2N1, S1N2 und S2N2 befindet sich eine Defektstelle D. Die Defektstelle D wird jedoch mit keinem der Abschnitte S1N1, S2N1, S1N2 und S2N2 vollständig erfasst.

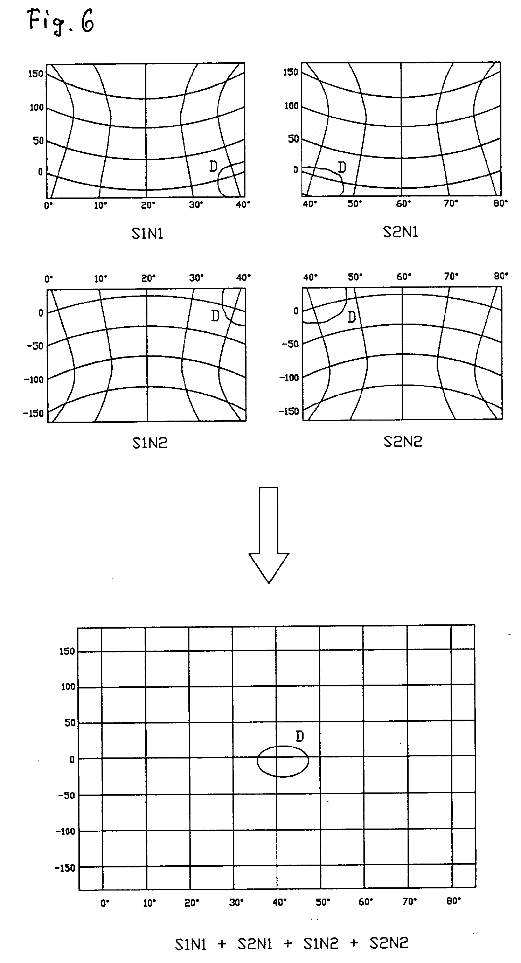

Die Figur 6 zeigt die Überführung der Abschnitte S1N1, S2N1, S1N2 und S2N2 in ein gemeinsames Koordinatensystem. Hierzu werden die während der Prüfung ermittelten Geometriedaten des Reifens verwendet. Bei der verwendeten Vorgehensweise zur abschnittsweisen interferometrischen Prüfung des Reifens müssen die Ergebnisse nicht nur sektorweise aneinandergereiht werden, sondern auch die Ergebnisse der oberen und der unteren Hälfte des Reifens aneinandergefügt werden. Dies bedeutet jedoch gegenüber dem Beispiel aus Figur 2 keinen prinzipiellen Unterschied, sondern lediglich einen rechnerischen Mehraufwand.

Da es sich beim Reifen um einen rotationssymmetrischen Körper handelt, sind die Koordinaten in Umfangsrichtung des Reifens in Winkelgraden angegeben. Die Koordinaten senkrecht zur Umfangsrichtung des Reifens sind hingegen als abgewickelte Länge, von der Reifenmitte aus gemessen, angegeben.

In den Ergebnissen der einzelnen Messabschnitte S1N1, S2N1, S1N2 und S2N2 ist der Defekt D jeweils nur teilweise sichtbar. Erst in der Darstellung der einzelnen Messabschnitte in einem gemeinsamen Koordinatensystem (S1N1+S2N1+S1N2+S2N2) ist der Defekt D nun in seiner wahren Form und Größe zu sehen.

## Patentansprüche

1. Verfahren zur Untersuchung der Verformung von Prüfobjekten mit diffus streuender Oberfläche, die verschiedenen Belastungen ausgesetzt werden, bei dem

- die Objektoberfläche abschnittsweise mit einem interferometrischen Messkopf mit Kamera untersucht wird, der mit einem interferometrisch flächenhaften Messverfahren arbeitet,
- die durch verschiedene Belastungen hervorgerufenen Verschiebungen oder Dehnungen der Objektoberfläche in den Abbildungen vom Prüfobjekt auf dem Bildsensor der Kamera erfasst werden,
- die auf dem Bildsensor erzeugten Abbildungen zur Weiterverarbeitung einem Bildverarbeitungssystem zugeführt werden,
- aus den erzeugten Abbildungen vom Bildverarbeitungssystem die Verschiebung oder der Spannungs-/ Dehnungszustand des Prüfobjektes berechnet wird,

**dadurch gekennzeichnet,**
**dass** der optische Strahlengang der Kamera des interferometrischen Messkopfes durch eine Kalibrierung bestimmt wird,
die Kamera des interferometrischen Messkopfes durch eine definierte Relativbewegung zum Prüfobjekt von einem Abschnitt der Objektoberfläche zum nächsten bewegt wird,
Lichtschnitte auf den interferometrisch vermessenen Abschnitten der Oberfläche des Prüfobjektes erzeugt werden,
die erzeugten Lichtschnitte auf der Objektoberfläche mittels einer Kamera erfasst werden,
über eine Triangulationsrechnung die Raumkoordinaten der Lichtschnitte berechnet werden,
aus den Raumkoordinaten der Lichtschnitte die Raumkoordinaten der Oberflächenabschnitte bestimmt werden
und mittels der gewonnenen Raumkoordinaten der Oberflächenabschnitte und mittels der Daten der durchgeführten Relativbewegungen des interferometrischen Messkopfes den interferometrisch erfassten Verformungsdaten die zutreffenden Raumkoordinaten zugeordnet werden.

**2.** Verfahren nach Anspruch 1, **dadurch gekennzeichnet,**
**dass** die Raumkoordinaten der Objektoberfläche abschnittsweise durch das Lichtschnittkonturerfassungssystem erfasst werden.

**3.** Verfahren nach Anspruch 2, **dadurch gekennzeichnet,**
**dass** der interferometrische Messkopf und das Lichtschnittkonturerfassungssystem starr miteinander verbunden sind und die Relativbewegungen von einem Abschnitt der Objektoberfläche zum nächsten gemeinsam durchführen.

**4.** Verfahren nach Anspruch 3, **dadurch gekennzeichnet,**
**dass** die Kamera des interferometrischen Messkopfes zur Aufnahme der erzeugten Lichtschnitte verwendet wird.

**5.** Verfahren nach einem der Ansprüche 1 bis 4, **dadurch gekennzeichnet,**
**dass** Lichtschnittebenen erzeugt und dazu verwendet werden, Lichtschnitte auf die Objektoberfläche zu projizieren.

**6.** Verfahren nach einem der Ansprüche 1 bis 5, **dadurch gekennzeichnet,**
**dass** die Lichtschnitte mittels projizierter Streifenmuster erzeugt werden.

**7.** Verfahren nach Anspruch 6, **dadurch gekennzeichnet,**
**dass** die Lichtschnitte mittels eines in der Patentschrift DE 197 38 179 C1 offengelegten Verfahrens erzeugt werden.

**8.** Verfahren nach Anspruch 6 oder 7, **dadurch gekennzeichnet,**
**dass** die Messung der Objektkontur abschnittsweise und an jeweils genau den Positionen des Meßsystems durchgeführt wird, an denen auch die Verformung gemessen wird.

**9.** Verfahren nach einem der Ansprüche 2 bis 5, **dadurch gekennzeichnet,**
**dass** wenige einzelne Lichtschnitte erzeugt werden, und die Raumkoordinaten der Objektoberfläche aus diesen Lichtschnitten bestimmt werden.

**10.** Verfahren nach Anspruch 9, **dadurch gekennzeichnet,**
**dass** die erzeugten Lichtschnitte während der Relativbewegungen zwischen dem Lichtschnittkonturerfassungssystem und dem Prüfobjekt durch eine Kamera aufgenommen und nachfolgend durch ein Bildverarbeitungssystem weiterverarbeitet werden.

**11.** Verfahren nach einem der Ansprüche 2 bis 10, **dadurch gekennzeichnet,**
**dass** die zu jeder Aufnahme der Abbildungen der erzeugten Lichtschnitte jeweils vorliegende momentane Position des Lichtschnittkonturerfassungssystems relativ zum Objekt bestimmt wird und daraus die ermittelten Koordinaten der Lichtschnitte in ein gemeinsames Koordinatensystem überführt werden.

**12.** Verfahren nach einem der Ansprüche 1 bis 11, **dadurch gekennzeichnet,**
**dass** die Bewegungseinrichtung zum Bewegen des interferometrischen Messkopfes und/oder des Lichtschnittkonturerfassungssystems relativ zum Prüfobjekt zur geometrischen Kalibrierung des jeweiligen Meßsystems verwendet wird.

**13.** Verfahren nach einem der Ansprüche 1 bis 12, **dadurch gekennzeichnet,**
**dass** die Lichtquellen zur Erzeugung der Lichtschnitte während der interferometrischen Messung ausgeschaltet werden.

**14.** Verfahren nach einem der Ansprüche 1 bis 13, **dadurch gekennzeichnet,**
**dass** benötigte, nicht gemessene Raumkoordinaten durch Interpolation aus bekannten Raumkoordinaten benachbarter Punkte berechnet werden.

**15.** Verfahren nach einem der Ansprüche 1 bis 14, **dadurch gekennzeichnet,**
**dass** benötigte, nicht gemessene Verformungswerte durch Interpolation aus bekannten Verformungswerten benachbarter Punkte berechnet werden.

**16.** Verfahren nach Anspruch 15, **dadurch gekennzeichnet,**
**dass** zur Berechnung von Verformungswerten aus Phasenbilder mittels Interpolation die Unstetigkeitsstellen in den Phasenbildern durch eine Sinus- und eine Cosinustransformation beseitigt werden, die Interpolation in den Sinus- bzw. Cosinustransformierten durchgeführt wird und anschließend die Phasenwerte aus den erhaltenen interpolierten Sinus- und Cosinuswerten berechnet werden.

**17.** Verfahren nach einem der Ansprüche 1 bis 16, **dadurch gekennzeichnet,**
**dass** die Darstellung der Ergebnisse der Verformungsmessung der einzelnen Abschnitte der Objektoberfläche in einem gemeinsamen Koordinatensystem erfolgt.

**18.** Verfahren nach einem der Ansprüche 1 bis 17, **dadurch gekennzeichnet,**
**dass** zur Darstellung der Ergebnisse der Verformungsmessung der Objektoberfläche die Objektoberfläche rechnerisch abgewickelt wird.

**19.** Verfahren nach einem der Ansprüche 1 bis 18, **dadurch gekennzeichnet,**
**dass** mittels des Lichtschnittkonturerfassungssystems gewonnene Daten zur Positionierung des interferometrischen Messkopfes gegenüber dem Prüfobjekt verwendet werden.

**20.** Vorrichtung zur Untersuchung von Prüfobjekten (1) mit diffus streuender Oberfläche,
bestehend aus einem interferometrischen Messkopf (2) mit einer Kamera (3) zur Aufnahme von Bilddaten, einem an die Kamera (3) angeschlossenem Bildverarbeitungssystem (11) zur Weiterverarbeitung der von der Kamera (3) erzeugten Bilder **dadurch gekennzeichnet,**
**dass** das Prüfsystem wenigstens eine Einrichtung (9) zum Ausführen von definierten Relativbewegungen zwischen dem interferometrischen Messkopf (2) und der Objektoberfläche (1) aufweist,
**dass** das Prüfsystem ein Lichtschnittkonturerfassungssystem (10) aufweist, bestehend aus wenigstens einer Einrichtung (5,6) zur Erzeugung von Lichtflächen (L1,L2), die so zu einer Kamera (4) hin ausgerichtet sind, dass die von dieser Einrichtung (5,6) erzeugten Lichtschnitte (P11, P21) auf dem Prüfobjekt (1) mit der Kamera (4) beobachtet werden können,
Mittel zur Bestimmung der Raumkoordinaten der Lichtschnitte,
Mittel zur Bestimmung von Raumkoordinaten der Objektoberflächenabschnitte daraus,
Mittel zur Zuordnung zutreffender Raumkoordinaten zu den interferometrisch erfassten Verformungsdaten.

**21.** Vorrichtung nach Anspruch 20, **dadurch gekennzeichnet,**
**dass** der interferometrische Messkopf (2), die Einrichtungen (5,6) zur Erzeugung von Lichtflächen (L1, L2) und die Kameras (3) und (4) über eine Befestigungsvorrichtung (7) starr miteinander verbunden sind und gemeinsam über eine Einrichtung (9) relativ zum Prüfobjekt (1) bewegbar sind.

**22.** Vorrichtung nach Anspruch 21, **dadurch gekennzeichnet,**
**dass** die Kamera (3) des interferometrischen Messkopfes (2) und die Kamera (4) des Lichtschnittkonturerfassungssystems (10) aus ein und derselben Kamera bestehen.

**23.** Vorrichtung nach Anspruch 21, **dadurch gekennzeichnet,**
**dass** die Kamera (3) des interferometrischen Messkopfes (2) und die Kamera (4) des Lichtschnittkonturerfassungssystems (10) nebeneinander oder übereinander angeordnet sind.

**24.** Vorrichtung nach einem der Ansprüche 20 bis 23, **dadurch gekennzeichnet,**
**dass** die Einrichtungen (5,6) zur Erzeugung von Lichtflächen so ausgebildet sind, dass die erzeugten Lichtflächen (L1,L2) jeweils ebene Flächen sind.

**25.** Vorrichtung nach einem der Ansprüche 20 bis 24, **dadurch gekennzeichnet,**
**dass** die Einrichtung zur. Erzeugung von Lichtflächen (L1,L2) aus einem Streifenprojektor besteht.

**26.** Vorrichtung nach Anspruch 25, **dadurch gekennzeichnet,**
**dass** die Kameras (3) und (4) aus ein und derselben Kamera bestehen, die Abbildungsoptik der Kamera ein Shearing Modul beinhaltet und die Scherrichtung des Shearing Moduls und die Linien des Projektionsgitters des Streifenprojektors parallel zueinander ausgerichtet sind.

**27.** Vorrichtung nach einem der Ansprüche 20 bis 24, **dadurch gekennzeichnet,**
**dass** die Einrichtung zur Erzeugung von Lichtflächen aus ein oder mehreren optischen Geräten (5,6) besteht, die einzelne Lichtflächen (L1,L2) erzeugen.

**28.** Vorrichtung nach Anspruch 27, **dadurch gekennzeichnet,**
**dass** die Kameras (3) und (4) aus ein und derselben Kamera bestehen, und die Abbildungsoptik der Kamera ein Shearing Modul beinhaltet.

**29.** Vorrichtung nach Anspruch 27 oder 28, **dadurch gekennzeichnet,**
**dass** die Einrichtung (9) zum gemeinsamen definierten Bewegen des interferometrischen Messkopfes (2) und des Lichtschnittkonturerfassungssystems (10) relativ zum Prüfobjekt (1) so ausgebildet ist, dass die Momentanposition des Lichtschnittkonturerfassungssystems (10) relativ zum Prüfobjekt (1) während des Verfahrvorganges bestimmt werden kann.

**30.** Vorrichtung nach einem der Ansprüche 27 bis 29, **dadurch gekennzeichnet,**
**dass** die Kamera (4) des Lichtschnittkonturerfassungssystems (10) mit einem mechanischen oder elektronischen Shutter ausgerüstet ist.

**31.** Vorrichtung nach einem der Ansprüche 20 bis 30, **dadurch gekennzeichnet,**
**dass** die Einrichtung (9) zum definierten Verfahren des interferometrischen Messkopfes (2) und/oder des Lichtschnittkonturerfassungssystems (10) relativ zum Prüfobjekt aus ein oder mehreren Schrittmotoren besteht.

**32.** Vorrichtung nach einem der Ansprüche 20 bis 31, **dadurch gekennzeichnet,** **dass** die Einrichtungen (5,6) zur Erzeugung der Lichtflächen (L1,L2) mit einem Schalter ausgerüstet sind, mit dem die Lichtquellen der Einrichtungen (5,6) ein- und ausgeschaltet werden.

**33.** Vorrichtung nach einem der Ansprüche 20 bis 32, **dadurch gekennzeichnet,** **dass** die Einrichtungen (5,6) zur Erzeugung der Lichtflächen aus einem oder mehreren Laserscannern bestehen.

**34.** Vorrichtung nach einem der Ansprüche 20 bis 33, **dadurch gekennzeichnet,** **dass** sowohl Kamera (3) als auch Kamera (4) an das Bildverarbeitungssystem (11) angeschlossen sind.

Fig. 1a

Fig. 1b

Fig. 2

Fig. 3a

Fig. 3b

Sektor 1

Sektor 2

Fig. 3c

Sektor 1 + Sektor 2

Fig. 4

Fig. 5

1

S1N1    S2N1    D

S1N2    S2N2

Fig.6

S1N1

S2N1

S1N2

S2N2

S1N1 + S2N1 + S1N2 + S2N2

**Europäisches Patentamt**

## EUROPÄISCHER RECHERCHENBERICHT

Nummer der Anmeldung

EP 01 11 9568

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 195 09 962 A (UNIV KARLSRUHE) 19. September 1996 (1996-09-19) * das ganze Dokument * | 1-34 | G01B11/16 G01M17/02 |
| A | EP 1 061 332 A (BANDAG INC) 20. Dezember 2000 (2000-12-20) * das ganze Dokument * | 1-34 | |
| A,D | DE 42 31 578 A (NOVA C O R D AG VADUZ) 24. März 1994 (1994-03-24) * Zusammenfassung; Abbildung 1 * | 1-34 | |
| A,D | US 5 786 533 A (NEWMAN JOHN W) 28. Juli 1998 (1998-07-28) * Zusammenfassung; Abbildung 5 * | 1-34 | |
| E | DE 100 09 870 A (MAEHNER BERNWARD) 13. September 2001 (2001-09-13) * das ganze Dokument * | 1-34 | |

RECHERCHIERTE SACHGEBIETE (Int.Cl.7)

G01B
G01M

Der vorliegende Recherchenbericht wurde für alle Patentansprüche erstellt

| Recherchenort | Abschlußdatum der Recherche | Prüfer |
|---|---|---|
| MÜNCHEN | 18. Januar 2002 | Beyfuß, M |

## ANHANG ZUM EUROPÄISCHEN RECHERCHENBERICHT
## ÜBER DIE EUROPÄISCHE PATENTANMELDUNG NR.

EP 01 11 9568

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2002

| im Recherchenbericht angeführtes Patentdokument | | Datum der Veröffentlichung | Mitglied(er) der Patentfamilie | | Datum der Veröffentlichung |
|---|---|---|---|---|---|
| DE 19509962 | A | 19-09-1996 | DE | 19509962 A1 | 19-09-1996 |
| EP 1061332 | A | 20-12-2000 | US | 6219143 B1 | 17-04-2001 |
| | | | BR | 0002632 A | 02-01-2001 |
| | | | EP | 1061332 A2 | 20-12-2000 |
| | | | JP | 2001066259 A | 16-03-2001 |
| | | | US | 2001021025 A1 | 13-09-2001 |
| DE 4231578 | A | 24-03-1994 | DE | 4231578 A1 | 24-03-1994 |
| US 5786533 | A | 28-07-1998 | AU | 710047 B2 | 09-09-1999 |
| | | | AU | 2802697 A | 19-11-1997 |
| | | | CA | 2251666 A1 | 06-11-1997 |
| | | | EP | 1021699 A1 | 26-07-2000 |
| | | | US | 5948976 A | 07-09-1999 |
| | | | WO | 9740991 A2 | 06-11-1997 |
| | | | US | 6092414 A | 25-07-2000 |
| | | | US | 6089085 A | 18-07-2000 |
| | | | US | 6088101 A | 11-07-2000 |
| | | | AU | 2429997 A | 07-11-1997 |
| | | | WO | 9739306 A1 | 23-10-1997 |
| DE 10009870 | A | 13-09-2001 | DE | 10009870 A1 | 13-09-2001 |

EPO FORM P0461

Für nähere Einzelheiten zu diesem Anhang : siehe Amtsblatt des Europäischen Patentamts, Nr. 12/82